# EUROPEAN PATENT APPLICATION

(11) **EP 3 760 579 A1**
(43) Date of publication of application: **06.01.2021**
(21) Application number: 18907611.0
(22) Date of filing: 17.12.2018
(51) Int. Cl.: C01B 13/11

(54) **OZONE GENERATING APPARATUS AND OZONE GENERATING METHOD**

(30) Priority: 02.03.2018 JP 2018037634
(71) Applicant: Sumitomo Precision Products Co., Ltd., Hyogo 660-0891 (JP)
(72) Inventor: YAMAKAWA Tatsuya, Amagasaki-shi, Hyogo 660-0891 (JP); YOSHIMURA Masaya, Amagasaki-shi, Hyogo 660-0891 (JP); FUJITA Ryo, Amagasaki-shi, Hyogo 660-0891 (JP)
(74) Representative: BRP Renaud & Partner mbB Rechtsanwälte Patentanwälte Steuerberater
(86) International application number: PCT/JP2018/046361
(87) International publication number: WO 2019/167389

(57) **Abstract**

An ozone generating apparatus includes a first flow channel provided with a humidifying section that imparts moisture to oxygen gas and configured to discharge oxygen gas that has passed through the humidifying section, a second flow channel configured to discharge oxygen gas having a moisture content of 10 ppb or less, a confluence channel in which the oxygen gas discharged via the first flow channel and the oxygen gas discharged via the second flow channel join together, an ozone generator configured to generate ozone gas using, as a material, mixed oxygen gas of the oxygen gases that have joined in the confluence channel, and a flow rate ratio adjustment section configured to adjust a ratio between respective flow rates of the oxygen gas discharged from the first flow channel to the confluence channel and the oxygen gas discharged from the second flow channel to the confluence channel.

## Description

### TECHNICAL FIELD

The present invention relates to an ozone generating apparatus and an ozone generating method.

### BACKGROUND ART

Ozone generating apparatuses which generate ozone gas using, as a material, oxygen gas have been widely used for semiconductor manufacturing process or the like.

As an ozone generating apparatus of this type, Patent Document 1 discloses an ozone generating apparatus including a humidifier that imparts moisture to oxygen gas. Specifically, in the ozone generating apparatus, a humidifier is connected in series between an oxygen gas source and an ozonizer. Moisture of an extremely small amount is imparted to oxygen gas supplied from an oxygen gas source 2 in a humidifier 4, and thereafter, the oxygen gas is supplied to an ozonizer 9. Thus, a moisture content in the oxygen gas supplied to the ozonizer 9 is adjusted to be in a target range (for example, 0.05 to 40 ppm). As described above, reduction with time in ozone concentration of the generated ozone gas is restrained by imparting moisture of an extremely small amount to the oxygen gas.

### CITATION LIST

### PATENT DOCUMENT

PATENT DOCUMENT 1: Japanese Patent No. 4166928

### SUMMARY OF THE INVENTION

### TECHNICAL PROBLEM

As in Patent Document 1, in a configuration in which moisture is merely imparted to oxygen gas by a humidifying section (a humidifier), it is difficult to adjust a moisture content of an extremely small amount in the oxygen gas to be in a target range.

Specifically, the moisture content imparted to oxygen by the humidifying section largely changes due to influences of, for example, temperature of water, temperature of oxygen gas, a flow rate, a pressure, or the like. Therefore, when such an operation conditions for the humidifying section changes, it is difficult to stably adjust the moisture content of an extremely small amount in the oxygen gas to the target range.

In addition, in a case in which generated ozone gas is used for semiconductor manufacturing process, or the like, there is a probability that, due to increase in the moisture content in the oxygen gas, moisture serves as an undesirable oxidant and adversely affects treatment effects. Therefore, depending on a supply target to which ozone gas is supplied, it is necessary to adjust the moisture content in the oxygen gas to a further low range. In this case, adjustment of the moisture content of an even smaller amount is necessary, and it is more difficult to adjust the moisture content to the target range.

The technique disclosed herein has been made by focusing on the above described problem, and it is therefore an object of the present invention to provide an ozone generating apparatus and an ozone generating method that allow stably performing adjustment of a moisture content of an extremely small amount in oxygen gas.

### SOLUTION TO THE PROBLEM

In order to solve the above described problem, according to the present invention, a configuration in which mixed oxygen gas of oxygen gas to which moisture has been imparted by a humidifying section and oxygen gas having a moisture content of 10 ppb or less is used as a material that is used by an ozone generator and a ratio between flow rates of the oxygen gases can be adjusted is provided.

Specifically, an ozone generating apparatus according to the present invention includes a first flow channel provided with a humidifying section that imparts moisture to oxygen gas and configured to discharge oxygen gas that has passed through the humidifying section, a second flow channel configured to discharge oxygen gas having a moisture content of 10 ppb or less, a confluence channel in which the oxygen gas discharged via the first flow channel and the oxygen gas discharged via the second flow channel join together, an ozone generator configured to generate ozone gas using, as a material, mixed oxygen gas of the oxygen gases that have joined together in the confluence channel, and a flow rate ratio adjustment section configured to adjust a ratio between a flow rate of the oxygen gas discharged from the first flow channel to the confluence channel and a flow rate of the oxygen gas discharged from the second flow channel to the confluence channel.

According to the present invention, the oxygen gas discharged via the first flow channel and the oxygen gas discharged via the second flow channel join together in the confluence channel. The oxygen gas discharged via the first flow channel contains moisture of a trace amount due to imparting of moisture thereto by the humidifying section. On the other hand, the oxygen gas discharged via the second flow channel has a moisture content of 10 ppb or less, that is, the moisture content thereof is substantially, zero. Thus, there is a difference between the moisture contents of these oxygen gases. Therefore, the moisture content of the mixed oxygen gas flowing in the confluence channel can be finely adjusted by adjusting the ratio of the flow rates of the oxygen gases by the flow rate ratio adjustment section. Moreover, by mixing the oxygen gas almost in a dry state to the oxygen gas to which moisture has been imparted by the humidifying section, the moisture in the oxygen gas can be reduced to an extremely small moisture content. Accordingly, the moisture content in the oxygen gas supplied to the ozone generator can be adjusted to be in a desired range of an extremely small amount.

Preferably, the ozone generating apparatus further includes a dehumidifying section configured to remove moisture in oxygen gas supplied from an oxygen gas source to a moisture content of 10 ppb or less, and the second flow channel is configured to discharge the oxygen gas that has passed through the dehumidifying section to the confluence channel.

Thus, even when a trace amount of moisture is contained in the oxygen gas of the oxygen gas source or even when the moisture content in the oxygen gas fluctuates, oxygen gas having a moisture content of 10 ppb can be reliably supplied from the second flow channel to the confluence channel.

Preferably, the ozone generating apparatus further includes a supply channel in which the oxygen gas sent from the oxygen gas source flows and which is configured to distribute the oxygen gas into the first flow channel and the second flow channel.

Thus, one oxygen gas source can be used by both the first flow channel and the second flow channel.

Preferably, the dehumidifying section is provided in the supply channel.

Thus, the oxygen gas after moisture thereof has been removed to a moisture content of 10 ppb or less by the dehumidifying section can be supplied to the first flow channel and the second flow channel. In the first flow channel, oxygen gas that substantially does not contain moisture is sent to the humidifying section, and therefore, the moisture content of the oxygen gas supplied to the humidifying section is substantially constant (zero). Accordingly, change in the moisture content of the oxygen gas supplied from the first flow channel to the confluence channel can be restrained. The oxygen gas that substantially does not contain moisture is also sent to the second flow channel, and therefore, change in the moisture content of the oxygen gas supplied from the second flow channel to the confluence channel can be restrained. Based on the foregoing, change in the moisture content of the oxygen gas mixed in the confluence channel can be restrained and the moisture content of the mixed oxygen gas can be adjusted with high accuracy. Moreover, one dehumidifying section can be used by both the first flow channel and the second flow channel.

Preferably, the ozone generating apparatus further includes an exhaust flow channel used for exhausting a portion of the oxygen gas flowing in the confluence channel.

Thus, even when a flow rate of the oxygen gas flowing in the first flow channel or the second flow channel is increased, a portion of oxygen gas corresponding to the increase in the flow rate can be exhausted to outside of a system from the exhaust flow channel. As a result, increase of the flow rate of the oxygen gas supplied to the ozone generator from the confluence channel to an excessively large level can be restrained. When the flow rate of oxygen gas flowing in the first flow channel or the second flow channel can be increased, a changeable range of the flow rate ratio between the oxygen gases that join together in the confluence channel can be increased. As a result, an adjustable range of the moisture content of the mixed oxygen gas can be increased.

Preferably, the first flow channel includes a primary pipe provided in upstream of the humidifying section and a secondary pipe provided in downstream of the humidifying section, and a pipe length of the secondary pipe is larger than a pipe length of the primary pipe.

In the secondary pipe of the first flow channel, the oxygen gas immediately after moisture has been imparted thereto by the humidifying section flows, and therefore, distribution unevenness in the moisture content in the oxygen gas tends to occur in the secondary pipe. When the pipe length of the secondary pipe is larger than the pipe length of the primary pipe, the moisture in the oxygen gas can be diffused in the secondary pipe and the distribution unevenness of the moisture in the oxygen gas can be restrained. As a result, the oxygen gas in which the moisture has been made uniform can be supplied to the ozone generator.

Preferably, the ozone generating apparatus further includes a detection section configured to detect an index indicating a moisture content of the mixed oxygen gas, and a controller configured to control the flow rate ratio adjustment section such that the index indicating the moisture content detected by the detection section approximates a target value.

Thus, even when the moisture content in the oxygen gas flowing in the first flow channel or the second flow channel changes due to an external factor, the moisture content in the oxygen gas supplied to the ozone generator can be reliably maintained at the target value.

An ozone generating method according to the present invention includes a humidifying step of imparting moisture to oxygen gas, a mixing step of mixing oxygen gas obtained in the humidifying step and oxygen gas having a moisture content of 10 ppb or less in a confluence channel, and an ozone generating step of generating ozone using, as a material, mixed oxygen gas obtained in the mixing step, and in the mixing step, a ratio between a flow rate of the oxygen gas obtained in the humidifying step and a flow rate of the oxygen gas having a moisture content of 10 ppb or less is adjusted.

Thus, the moisture content in the oxygen gas supplied to the ozone generator can be stably adjusted to be in a desired range of an extremely small amount.

Preferably, the ozone generating method further includes a dehumidifying step of dehumidifying moisture in oxygen gas from an oxygen gas source to a moisture content of 10 ppb or less, in the humidifying step, moisture is imparted to oxygen gas obtained in the dehumidifying step, and in the mixing step, the oxygen gas obtained in the humidifying step and the oxygen gas obtained in the dehumidifying step are mixed in the confluence channel.

Thus, change in the moisture contents in the oxygen gases used in the mixing step can be restrained, and accordingly, change in the moisture content in the mixed oxygen gas can be restrained.

### ADVANTAGES OF THE INVENTION

According to the present invention, an ozone generating apparatus and an ozone generating method that allow stably performing adjustment of a moisture content of an extremely small amount in oxygen gas can be provided.

### BRIEF DESCRIPTION OF THE DRAWINGS

[FIG. 1] FIG. 1 is a schematic block diagram illustrating an entire configuration of an ozone generating apparatus according to an embodiment.
[FIG. 2] FIG. 2 is a schematic block diagram of a humidifying section.
[FIG. 3] FIG. 3 is a schematic block diagram illustrating an entire configuration of an ozone generating apparatus according to a modified example of the embodiment.

### DESCRIPTION OF EMBODIMENTS

Embodiments of the present invention will be described in detail below with reference to the accompanying drawings. Note that the following embodiments are merely preferable examples by nature and are not intended to limit the scope of application or uses of the present invention.

### Embodiment

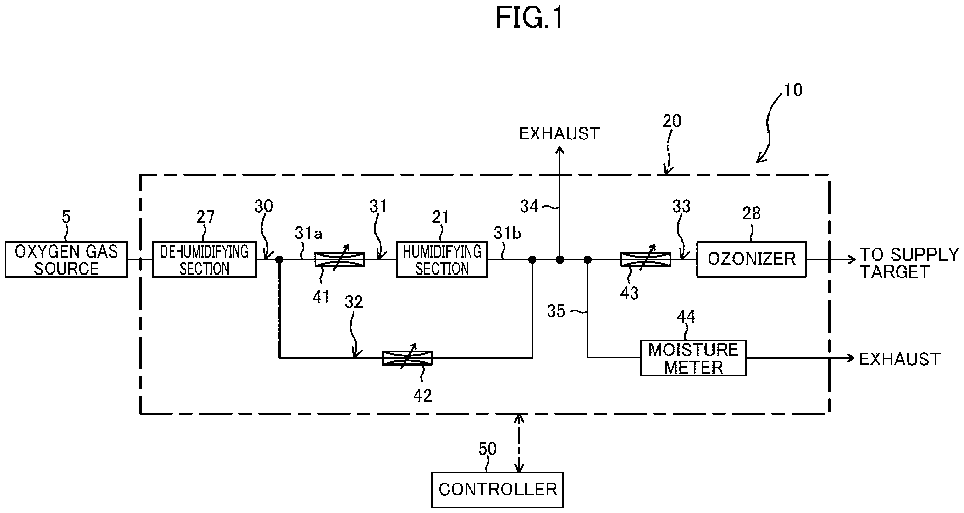

An embodiment of the present invention is an ozone generating apparatus 10. As illustrated in FIG. 1, the ozone generating apparatus 10 supplies ozone gas generated using, as a material, oxygen gas supplied from an oxygen gas source 5 to a predetermined supply target. The oxygen gas source 5 is formed of an oxygen gas cylinder in which, for example, oxygen gas is filled. For example, high-purity oxygen gas with a purity of 99.9999% is filled in the oxygen gas cylinder. A moisture content in the oxygen gas is, for example, in a range of 50 ppb to 1000 ppb. The supply target of the ozone gas is, for example, a semiconductor manufacturing facility.

The ozone generating apparatus 10 includes an apparatus main body 20 and a controller 50. The apparatus main body 20 includes, as main components, a humidifying section 21, a dehumidifying section 27, and an ozonizer 28 (an ozone generator). The apparatus main body 20 includes, as main gas flow channels, a supply channel 30, a first flow channel 31, a second flow channel 32, and a confluence channel 33. The first flow channel 31 and the second flow channel 32 are connected in parallel between the supply channel 30 and the confluence channel 33.

An inflow end of the supply channel 30 is connected to the oxygen gas source 5. Each of an inflow end of the first flow channel 31 and an inflow end of the second flow channel 32 is connected to the inflow end of the supply channel 30. The supply channel 30 is provided with the dehumidifying section 27. The dehumidifying section 27 is formed, for example, of an adsorption-type dehumidifier that selectively absorbs moisture in oxygen gas. In the dehumidifying section 27, the moisture is removed such that a moisture content in the oxygen gas is 10 ppb or less. That is, the moisture content in the oxygen gas that has passed through the dehumidifying section 27 is substantially zero.

The oxygen gas after the moisture has been removed therefrom by the dehumidifying section 27 is sent to the first flow channel 31. The first flow channel 31 is provided with the humidifying section 21 that imparts moisture to the oxygen gas, and also, is configured to discharge the oxygen gas that has passed through the humidifying section 21. The first flow channel 31 includes a primary pipe 31a provided in upstream of the humidifying section 21 and a secondary pipe 3 1b provided in downstream of the humidifying section 21. The primary pipe 31a has an inflow end connected to the supply channel 30 and an outflow end connected to the humidifying section 21. The secondary pipe 31b has an inflow end connected to the humidifying section 21 and an outflow end connected to the confluence channel 33.

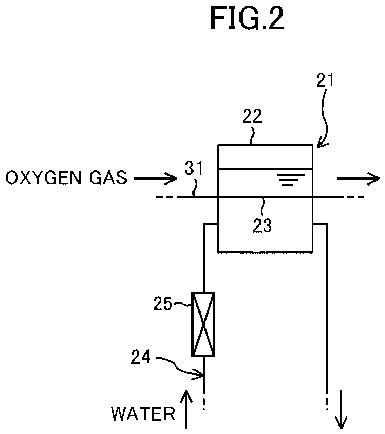

As schematically illustrated in FIG. 2, the humidifying section 21 is a so-called permeation-type humidifier including a tank 22 with immersion water therein and a resin tube 23 (having a hollow shape and made of a moisture permeable membrane) provided in the tank 22. That is, in the humidifying section 21, the oxygen gas flows inside the resin tube 23, and thus, water molecules around the resin tube 23 permeate the resin tube 23 and enters therein. Thus, in the humidifying section 21, moisture of a trace amount is imparted to the oxygen gas. The oxygen gas to which moisture has been imparted in the humidifying section 21 is discharged to the confluence channel 33 via the secondary pipe 31b. Note that the oxygen gas after having been humidified by the humidifying section 21 has, for example, a moisture content in a range of 800 ppb to 2000 ppb. Note that the humidifying section 21 may be, for example, of a type in which oxygen gas flows in the tank 22, water is filled in the resin tube 23, and a trace amount of moisture of the filled water is imparted to the oxygen gas.

A water temperature adjustment circuit 24 that adjusts temperature of water in the tank 22 is connected to the tank 22. A heat exchanger 25 that cools or heats water is provided in upstream of the tank 22 in the water temperature adjustment circuit 24. The heat exchanger 25 is provided, for example, in a heat pump type chiller unit. In order to restrain change in water temperature in the tank 22, the tank 22 is preferably installed in a room. In this case, air temperature in the room is preferably adjusted to predetermined temperature by an air-conditioner or the like.

A pipe length of the secondary pipe 31b is larger than a pipe length of the primary pipe 31a. In the secondary pipe 31b, distribution unevenness in the moisture content in the oxygen gas tends to occur. When the pipe length of the secondary pipe 31b is larger than the pipe length of the primary pipe, the moisture in the oxygen gas can be diffused in the secondary pipe 31b and distribution unevenness in the moisture in the oxygen gas can be restrained. As a result, the oxygen gas in which the moisture has been made uniform can be supplied to the ozonizer 28 or a detection flow channel 35. Note that a flow channel cross-sectional area of the secondary pipe 31b is preferably smaller than a flow channel cross-sectional area of the primary pipe 31a.

In the first flow channel 31, a first flow rate adjustment valve 41 is provided, for example, in the primary pipe 31a. The first flow rate adjustment valve 41 may be provided in the secondary pipe 31b. The first flow rate adjustment valve 41 adjusts a flow rate of the oxygen gas flowing in the first flow channel 31.

The oxygen gas after the moisture has been removed therefrom by the dehumidifying section 27 is sent to the second flow channel 32. The second flow channel 32 is configured to discharge oxygen gas having a moisture content of 10 ppb or less. A second flow rate adjustment valve 42 is provided in the second flow channel 32. The second flow rate adjustment valve 42 adjusts a flow rate of the oxygen gas flowing in the second flow channel 32. The first flow rate adjustment valve 41 and the second flow rate adjustment valve 42 form a flow rate ratio adjustment section (details of which will be described later).

In the confluence channel 33, mixed oxygen gas obtained by mixing the oxygen gas discharged via the first flow channel 31 and the oxygen gas discharged via the second flow channel 32 flows. Each of an outflow end of the first flow channel 31 and an outflow end of the second flow channel 32 is connected to an inflow end of the confluence channel 33. An outflow end of the confluence channel 33 is connected to the ozonizer 28.

A third flow rate adjustment valve 43 is provided in the confluence channel 33. The third flow rate adjustment valve 43 adjusts a flow rate of the mixed oxygen gas flowing in the confluence channel 33 (that is, material gas supplied to the ozonizer 28).

An exhaust flow channel 34 and the detection flow channel 35 are connected to the confluence channel 33, for example, in upstream of the third flow rate adjustment valve 43. In the confluence channel 33, for example, an inflow end of the exhaust flow channel 34 is located in upstream of an inflow end of the detection flow channel 35. Outflow ends of the exhaust flow channel 34 and the detection flow channel 35 are opened to outside of a system (air). Note that a flow rate adjustment valve or an open/close valve can be provided in the exhaust flow channel 34 and the detection flow channel 35.

A moisture meter 44 is provided in the detection flow channel 35. The moisture meter 44 detects a moisture content in the mixed oxygen gas that has joined in the confluence channel 33. That is, the moisture meter 44 forms a detection section that detects a moisture content in the material gas supplied to the ozonizer 28. A moisture meter that can quickly response in moisture detection is preferably used as the moisture meter 44. For example, the moisture meter 44 is formed of a laser absorption spectroscopy type moisture meter. A detection section of the moisture meter 44 is input to the controller 50.

The ozonizer 28 generates ozone using, as a material, the mixed oxygen gas discharged via the confluence channel 33. The ozonizer 28 is, for example, formed of a silent discharge type ozone generator that generates ozone gas by silent discharge. The ozone gas generated by the ozonizer 28 is supplied to a predetermined supply target.

The controller 50 is configured to control each of the first flow rate adjustment valve 41, the second flow rate adjustment valve 42, and the third flow rate adjustment valve 43. The controller 50 is configured using a microcomputer and a memory device (specifically, a semiconductor memory) that stores a software used for operating the microcomputer.

For example, the controller 50 adjusts at least an aperture of the third flow rate adjustment valve 43 such that a flow rate of the material gas supplied to the ozonizer 28 approximates a target flow rate.

The controller 50 adjusts a flow rate ratio R such that the moisture content detected by the moisture meter 44 approximates a target moisture content in the material gas supplied to the ozonizer. Herein, when it is assumed that a flow rate of the oxygen gas discharged from the first flow channel 31 to the confluence channel 33 is Q1 and a flow rate of the oxygen gas discharged from the second flow channel 32 to the confluence channel 33 is Q2, the flow rate ratio R is expressed by R = Q1/(Q1 + Q2). The flow rate ratio R is adjusted, and thus, the moisture content supplied to the ozonizer is adjusted to the target moisture content (details will be described later). Note that the flow rate ratio R is adjusted, for example, in a range of 0.0625 to 1.0.

### - Operation -

An operation (an ozone generating method) for generating ozone in the ozone generating apparatus 10 will be described in detail.

When the ozone generating apparatus 10 is operated, oxygen gas of the oxygen gas source 5 flows in the supply channel 30 and passes through the dehumidifying section 27. In the dehumidifying section 27, a dehumidifying step of removing the moisture in the oxygen gas from the oxygen gas source 5 to a moisture content of 10 ppb. Therefore, even when a certain amount of moisture is contained in the oxygen gas of the oxygen gas source 5 or even when a moisture content in the oxygen gas changes, the moisture content in the oxygen gas that has undergone the dehumidifying step is substantially zero.

The oxygen gas the moisture content of which has been made 10 ppb or less in the dehumidifying step is distributed to the first flow channel 31 and the second flow channel 32.

The oxygen gas distributed to the first flow channel 31 passes through the humidifying section 21. In the humidifying section 21, a humidifying step of imparting moisture to the oxygen gas is performed. In this case, in the humidifying section 21, the oxygen gas in which the moisture has been made substantially zero by the dehumidifying section 27 is supplied. Therefore, for example, even when the moisture content in the oxygen gas supplied from the oxygen gas source 5 slightly changes, the moisture content in the oxygen gas supplied to the humidifying section 21 does not substantially change (remains zero). As described above, each of the water temperature in the tank 22 of the humidifying section 21 and ambient temperature of the tank 22 is controlled to a certain level. Therefore, external factors that affect humidifying capability of the humidifying section 21 are reduced, so that change in the moisture content in the oxygen gas supplied from the first flow channel 31 to the confluence channel 33 can be restrained.

The oxygen gas distributed to the second flow channel 32 is neither dehumidified nor humidified and is supplied to the confluence channel 33. In this case, the oxygen gas in which the moisture has been made substantially zero by the dehumidifying section 27 is supplied to the second flow channel 32. Therefore, the moisture content in the oxygen gas supplied from the second flow channel 32 to the confluence channel 33 does not substantially change.

In the confluence channel 33, a mixing step of mixing the oxygen gas (which will be hereinafter referred to as first oxygen gas for convenience) discharged via the first flow channel 31 and the oxygen gas (which will be hereinafter referred to as second oxygen gas for convenience) discharged via the second flow channel 32 is performed. In this case, a moisture content of the first oxygen gas is larger than a moisture content of the second oxygen gas. Therefore, in the mixing step, the moisture content of the mixed oxygen gas can be finely adjusted by adjusting the flow rate ratio R between the flow rate Q1 of the first oxygen gas and the flow rate Q2 of the second oxygen gas.

Specifically, the controller 50 controls apertures of the first flow rate adjustment valve 41 and the second flow rate adjustment valve 42 such that the moisture content detected by the moisture meter 44 approximates the target moisture content. Thus, the moisture content of the material gas of the ozonizer 28 can be made closer to the target range.

As described above, the moisture content of the first oxygen gas and the moisture content of the second oxygen gas do not substantially change due to an external factor, and therefore, the flow rate ratio R is dominant as to the moisture content of the material gas. Accordingly, adjustment of the moisture content of an extremely small amount in the material gas can be stably performed by the above described control of the flow rate ratio R.

The material gas containing moisture of an extremely small amount (for example, 0.05 ppm to 2.6 ppm) can be easily obtained by diluting the first oxygen gas slightly containing moisture with the second oxygen gas having a moisture content of substantially zero.

Furthermore, by increasing one of the flow rate Q1 of the first oxygen gas and the flow rate Q2 of the second oxygen gas to a level higher than the other, a changeable range of the flow rate ratio R can be increased, and accordingly, an adjustable range of the moisture content of the material gas can be increased. On the other hand, when Q1 or Q2 is increased in the above described manner, there is a probability that the flow rate (Q1 + Q2) of the mixed oxygen gas in the confluence channel 33 is increased and the flow rate exceeds a target flow rate of the ozonizer 28. Under the above described condition, excessive mixed oxygen gas is exhausted to outside of the system via the exhaust flow channel 34. Therefore, the adjustable range of the moisture content of the material gas can be increased while the flow rate of the ozonizer 28 is maintained at the target flow rate.

The moisture meter 44 is of a laser absorption spectroscopy type that quickly responses. Therefore, based on the moisture amount detected by the moisture meter 44, feedback control of the flow rate ratio R can be quickly performed. As a result, even when the moisture content of the material gas changes due to some external factor, the moisture content can be caused to quickly converge to a target value.

### Modification of Embodiment

In the configuration of the above described embodiment (FIG. 1), the second flow channel 32 may be omitted. That is, the ozone generating apparatus 10 may be formed in a configuration including the dehumidifying section 27 that removes moisture in oxygen gas supplied from an oxygen gas source to 10 ppb or less, the humidifying section 21 that imparting moisture to the oxygen gas that has passed through the dehumidifying section 27, and the ozonizer 28 that generates ozone gas using, as a material, the oxygen gas that has passed through the humidifying section 21. Also, in this configuration, in the first flow channel 31, the oxygen gas that does not substantially contain moisture is sent to the humidifying section 21, and therefore, the moisture content in the oxygen gas supplied to the humidifying section 21 is substantially constant (zero). Accordingly, change in the moisture content in the oxygen gas supplied from the first flow channel 31 to the ozonizer 28 can be restrained.

### Other Embodiments

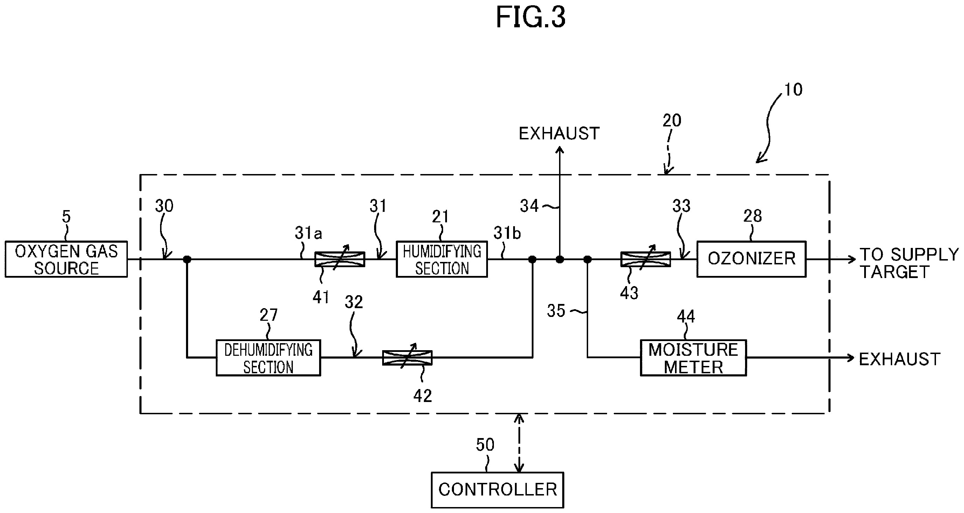

In the above described embodiment, the dehumidifying section 27 is provided in the supply channel 30. However, for example, as illustrated in FIG. 3, the dehumidifying section 27 may be provided in the second flow channel 32. In this case, the moisture content of the mixed oxygen gas can be adjusted by adjusting the ratio between the flow rate Q1 of the oxygen gas humidified by the first flow channel 31 and the flow rate Q2 of the oxygen gas dehumidified by the second flow channel 32.

For example, two oxygen gas sources may be provided, one of the oxygen gas sources may be connected to the first flow channel 31, and the other one of the oxygen gas sources may be connected to the second flow channel 32.

The humidifying section 21 of the above described embodiment may not be of the permeation type, and may be a humidifier using, for example, a diffusion tube method or a frost point generating method.

### INDUSTRIAL APPLICABILITY

As described above, the present invention is useful for an ozone generating apparatus and an ozone generating method.

### DESCRIPTION OF REFERENCE CHARACTERS

- 10: Ozone generating apparatus
- 21: Humidifying section
- 27: Dehumidifying section
- 28: Ozonizer (ozone generator)
- 30: Supply channel
- 31: First flow channel
- 31a: Primary pipe
- 31b: Secondary pipe
- 32: Second flow channel
- 33: Confluence channel
- 34: Exhaust flow channel
- 41: First flow rate adjustment valve (Flow rate ratio adjustment section)
- 42: Second flow rate adjustment valve (Flow rate ratio adjustment section)
- 44: Moisture meter (detection section)
- 50: Controller

## Claims

1. An ozone generating apparatus, comprising:
a first flow channel provided with a humidifying section that imparts moisture to oxygen gas and configured to discharge oxygen gas that has passed through the humidifying section;
a second flow channel configured to discharge oxygen gas having a moisture content of 10 ppb or less;
a confluence channel in which the oxygen gas discharged via the first flow channel and the oxygen gas discharged via the second flow channel join together;
an ozone generator configured to generate ozone gas using, as a material, mixed oxygen gas of the oxygen gases that have joined together in the confluence channel; and
a flow rate ratio adjustment section configured to adjust a ratio between a flow rate of the oxygen gas discharged from the first flow channel to the confluence channel and a flow rate of the oxygen gas discharged from the second flow channel to the confluence channel.

2. The ozone generating apparatus of claim 1, further comprising:
a dehumidifying section configured to remove moisture in oxygen gas supplied from an oxygen gas source to a moisture content of 10 ppb,
wherein
the second flow channel is configured to discharge the oxygen gas that has passed through the dehumidifying section to the confluence channel.

3. The ozone generating apparatus of claim 2, further comprising:
a supply channel in which the oxygen gas sent from the oxygen gas source flows and which is configured to distribute the oxygen gas into the first flow channel and the second flow channel.

4. The ozone generating apparatus of claim 3, wherein
the dehumidifying section is provided in the supply channel.

5. The ozone generating apparatus of any one of claims 1 to 4, further comprising:
an exhaust flow channel used for exhausting a portion of the oxygen gas flowing in the confluence channel.

6. The ozone generating apparatus of any one of claims 1 to 5, wherein the first flow channel includes
a primary pipe provided in upstream of the humidifying section, and
a secondary pipe provided in downstream of the humidifying section, and
a pipe length of the secondary pipe is larger than a pipe length of the primary pipe.

7. The ozone generating apparatus of any one of claims 1 to 6, further comprising:
a detection section configured to detect an index indicating a moisture content of the mixed oxygen gas; and
a controller configured to control the flow rate ratio adjustment section such that the index indicating the moisture content detected by the detection section approximates a target value.

8. An ozone generating method comprising:
a humidifying step of imparting moisture to oxygen gas;
a mixing step of mixing oxygen gas obtained in the humidifying step and oxygen gas having a moisture content of 10 ppb or less in a confluence channel; and
an ozone generating step of generating ozone using, as a material, mixed oxygen gas obtained in the mixing step,
wherein
in the mixing step, a ratio between a flow rate of the oxygen gas obtained in the humidifying step and a flow rate of the oxygen gas having a moisture content of 10 ppb or less is adjusted.

9. The ozone generating method of claim 8, further comprising:
a dehumidifying step of dehumidifying moisture in oxygen gas from an oxygen gas source to a moisture content of 10 ppb or less,
wherein
in the humidifying step, moisture is imparted to oxygen gas obtained in the dehumidifying step, and
in the mixing step, the oxygen gas obtained in the humidifying step and the oxygen gas obtained in the dehumidifying step are mixed in the confluence channel.

10. An ozone generating apparatus comprising:
a dehumidifying section configured to remove moisture in oxygen gas supplied from an oxygen gas source to a moisture content of 10 ppb or less;
a humidifying section configured to impart moisture to oxygen gas that has passed through the dehumidifying section; and
an ozone generator configured to generate ozone gas using, as a material, oxygen gas that has passed through the humidifying section.
